# EUROPEAN PATENT SPECIFICATION

(11) **EP 1 674 759 B1**
(45) Date of publication and mention of the grant of the patent: **05.12.2007**
(21) Application number: 05112100.2
(22) Date of filing: 14.12.2005
(51) Int. Cl.: F16F 9/36, F16J 15/32

(54) **Sealing device for shock-absorbers**
Dichtung für Dämpfer
Dispositif d'étanchéité pour amortisseur

(30) Priority: 21.12.2004 IT TO20040890
(43) Date of publication of application: 28.06.2006
(73) Proprietor: RFT S.p.A., 10121 Torino (IT)
(72) Inventor: Barbera, Stellario, 10137 TORINO (IT); Restivo, Riccardo, 10138 TORINO (IT)
(74) Representative: Fioravanti, Corrado

(56) References cited:
- EP-A- 1 074 760
- US-A- 2 476 324
- US-A- 4 055 352
- US-A- 4 494 632
- US-A1- 2001 023 638

## Description

The present invention relates to a sealing device for shock-absorbers of the type defined in the preamble of claim 1.

Sealing devices of the type illustrated diagrammatically in Figure 1 of the appended drawings are currently known (see US-A-2001/0023638). Referring to Figure 1, a sealing device of the conventional type comprises a generally annular rubber body 10 having a cross-section shaped to define various parts suitable for performing various respective functions. The rubber body 10 defines in its central region an external circumferential groove 11 having a generally rectangular cross-section in which is partially inserted a metal insert 20 in the shape of an annular disc which acts as a support element for the rubber body 10 and as a reinforcement for supporting the axial loads to which the sealing device is subjected on the oil side during the functioning thereof. On the axially lower side with respect to the metal insert 20, the rubber body 10 defines a conical dust-cover lip 12 projecting in a radially internal direction. On the opposite side or on the axially upper side with respect to the metal insert 20, the body 10 defines three coaxial lips 13, 14, 15, namely a radially external lip 13 for static sealing, an optional intermediate lip 14 and a radially internal oil-guard lip 15 which is urged in the radially internal direction by a circumferential spring 17 positioned in a groove 16 formed in a radially external surface of the oil-guard lip 15 to ensure the sliding contact pressure of that lip against the stem of a shock-absorber (indicated schematically at S).

It has been found that, in conventional devices of the above-mentioned type, the oil-guard lip tends to be excessively squashed in the radially internal direction owing to the high pressures of the oil. Therefore, increasing the area of contact between the oil-guard lip and the stem of the shock-absorber also increases the sliding wear at the interface between those two components when the stem moves in translation axially with respect to the sealing device. In the field of shock-absorbers, there is currently an ever increasing demand to reduce the sliding wear as much as possible in order to have an ever more rapid response from the shock-absorbers.

A principal object of the present invention is to provide an improved sealing device for shock-absorbers which is capable of reducing the friction forces which develop against the stem, maintaining the performance unaltered in terms of sealing with respect to the oil.

A further object of the invention is to provide a sealing device which is less expensive and lighter compared to conventional devices.

Those objects are achieved in accordance with the present invention by a sealing device having the features defined in the appended claims.

A description will now be given of the structural and functional features of some preferred but non-limiting embodiments of a device according to the invention; reference will be made to the appended drawings in which identical reference numerals denote identical or corresponding parts in the various Figures. In the drawings:
Figure 1 is a view of a sealing device of the conventional type in partial axial section;
Figure 2 is a plan view of a first embodiment of a sealing device according to the invention;
Figures 3 and 4 are two views in axial section, on an enlarged scale, according to the respective lines III-III and IV-IV of Figure 2;
Figure 5 is a plan view of a second embodiment of a sealing device according to the invention; and
Figures 6 and 7 are two views in axial section, on an enlarged scale, according to the respective lines VI-VI and VII-VII of Figure 5.

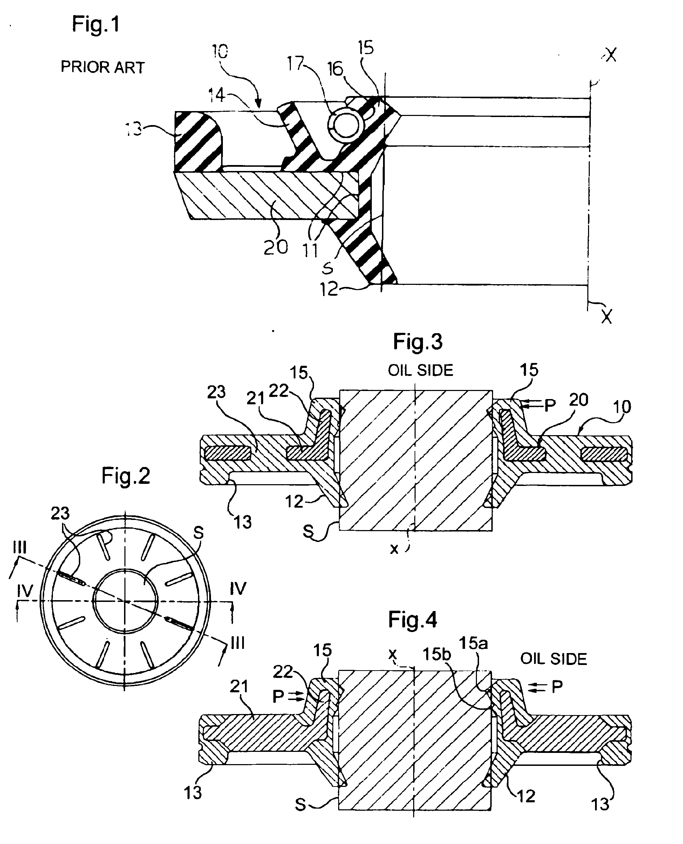

Referring now to Figures 2 to 4, a sealing device according to the invention differs from the conventional device illustrated in Figure 1 principally by the presence of an annular discoidal insert 20 of plastics material, having the forms described in detail hereinafter, which replaces the conventional metal insert.

The sealing device comprises a generally annular body 10 of rubber or elastomeric material moulded over a reinforcing insert 20 of plastics material. The insert 20 has a radially external portion 21 in the form of a discoidal flange, and a radially internal portion 22 which extends from one side of the discoidal portion 21 (towards the "oil side"), forming a substantially axial or slightly frustoconical tubular appendage which tapers away from the discoidal portion 21.

In the present text, the terms and expressions indicating positions and orientations, such as "axial" and "radial" or "transverse" are intended to refer to the central geometric axis x of the sealing device, coinciding with the central longitudinal axis of the shock-absorber on which the device is to be fitted.

The rubber body 10 defines an oil-guard lip 15 which covers the appendage 22 of the insert 20 at least on the radially internal side of the latter (which, in use, faces the stem S of the shock-absorber), a conventional frustoconical dust-cover lip 12 on the side opposite the oil-guard lip 15, and a conventional static sealing lip 13, which can project equally well towards the oil side or towards the opposite side, depending on the type of shock-absorber.

In order to contact the stem S in a sliding manner, the oil-guard lip 15 has a conventional principal sliding contact formation 15a in the shape of a right-angle on the radially internal side, and a secondary sliding contact formation 15b which is spaced axially from the principal formation 15a. It should be noted that in all of the drawings, the various lips of the rubber body 10 are illustrated in the non-deformed condition.

The appendage 22 acts as a reinforcing structure for the oil-guard lip 15 in order to ensure that that lip exerts a correct and controlled radial contact pressure against the stem S. In practice, the appendage 22 opposes the radial component P of the oil pressure which tends to squash the lip 15 against the stem. It will be appreciated that the appendage 22 advantageously enables the conventional circumferential spring (17) mentioned above to be eliminated and therefore the production costs of the spring and the time associated with the assembly thereof on the sealing device to be reduced. In addition, the plastics material constituting the insert 20 (for example, polyamide) confers on the appendage 22 the desired degree of flexibility in an axial plane.

It will also be appreciated that the choice of using an insert of plastics material is advantageous in terms of lightness and costs compared with a conventional metal insert. In particular, plastics material is suitable in an optimum manner for obtaining complex shapes, which are readily obtainable by moulding techniques. It is advantageously possible to form in the insert 20 raised portions and/or recesses, such as, for example, axial slits or notches 23, on which or in which there are produced, by overmoulding, complementary rubber formations which co-operate with those raised portions/recesses in order to improve anchorage between the rubber body 10 and the insert 20.

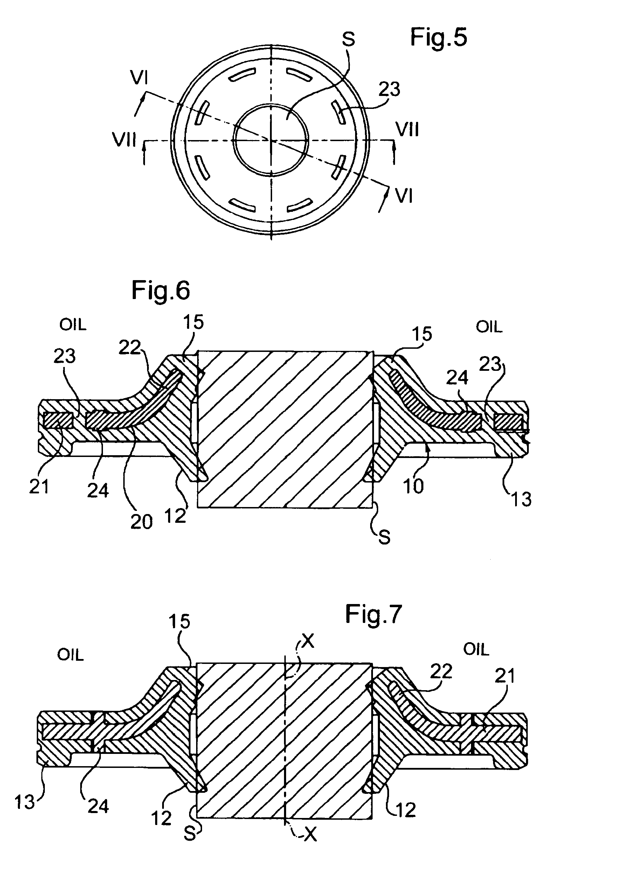

In the embodiment of Figures 3 and 4, the appendage 22 extends at an obtuse angle from the radial flange portion 21. According to an alternative embodiment of the invention, as illustrated in Figures 5 to 7, the appendage 22 can be joined to the flange 21 by means of a curved connecting portion in order to render the appendage more flexible. The numeral 24 indicates raised portions having functions analogous to those mentioned above with reference to the notches or openings 23.

It will be appreciated that the invention is not limited to the embodiments described and illustrated here, which are to be regarded as examples of the sealing device; on the contrary, the invention can be modified in respect of shape, dimensions and arrangements of parts, structural details and materials used. For example, according to an alternative embodiment (not shown), the appendage 22 could be constituted by a plurality of circumferentially adjacent resilient tongues which have a cross-sectional shape identical or similar to those illustrated in Figures 3, 4 and 6, 7, but which are spaced at an equal distance from one another in the circumferential direction. Finally, the rubber body 10 could also define lips other than those illustrated in Figures 2 to 7, for example an intermediate lip of the type indicated 14 in Figure 1.

## Claims

1. A sealing device for shock-absorbers, of the type comprising a generally annular body (10) of rubber or elastomeric material associated with an annular reinforcing insert (20),
wherein the body (10) forms, in a radially internal position or centrally, an oil-guard lip (15) and a dust-cover lip (12) which project axially on opposite sides in order to contact in a sliding manner a stem (S) of a shock-absorber, and, in a radially external position or peripherally, a static sealing lip (13),
and wherein the insert (20) comprises a substantially annular discoidal portion (21) for supporting and connecting the lips (12, 13, 15);
**characterized in that** the insert (20) is produced from plastics material and also forms a reinforcing structure (22) which projects axially from a radially internal region of the discoidal portion (21) and which is attached to the oil-guard lip (15) in order to ensure that that lip exerts a controlled radial contact pressure against the stem (S).

2. A sealing device according to claim 1, **characterized in that** the reinforcing structure (22) extends from one side of the discoidal portion (21), and has a substantially axial or slightly frustoconical generally tubular shape which tapers away from the discoidal portion (21).

3. A sealing device according to claim 2, **characterized in that** the reinforcing structure (22) comprises a substantially axial or slightly frustoconical tubular appendage which tapers away from the discoidal portion (21).

4. A sealing device according to claim 1, **characterized in that** the reinforcing structure (22) extends at an obtuse angle from the discoidal portion (21).

5. A sealing device according to claim 1, **characterized in that** the reinforcing structure (22) is joined to the discoidal portion (21) by means of a curved connecting portion.

6. A sealing device according to claim 1, **characterized in that** the body (10) is overmoulded or vulcanized on the plastics insert (20), and **in that** the insert (20) has recesses (23) and/or raised portions (24) on which or in which there are produced, by overmoulding, complementary rubber formations which co-operate with the raised portions and/or recesses in order to improve anchorage between the body (10) and the reinforcing insert (20).

7. A sealing device according to claim 6, **characterized in that** the recesses (23) comprise axial openings or notches (23) formed in the discoidal portion (21).

8. A sealing device according to claim 1, **characterized in that** the insert (20) is made of polyamide.

9. A sealing device according to claim 1, **characterized in that** the body (10) also forms at least a fourth sealing lip (14).

## Patentansprüche

1. Abdichtungsvorrichtung für Stoßdämpfer, die einen im Allgemeinen ringförmigen Körper (10) aus Gummi oder einem elastomeren Werkstoff enthält, dem ein ringförmiger Verstärkungseinsatz (20) zugeordnet ist,
wobei der Körper (10) an einer radial innen liegenden Stelle oder in der Mitte eine Ölschutzlippe (15) und eine Staubschutzlippe (12), die an gegenüber liegenden Seiten axial vorspringen, um mit einem Schaft (S) eines Stoßdämpfers gleitend in Berührung zu treten, sowie eine radial außen liegende oder am Umfang verlaufende statische Dichtungslippe (13) bildet,
und wobei der Einsatz (20) einen im Wesentlichen ringförmigen, scheibenförmigen Teil (21) enthält, um die Lippen (12, 13, 15) zu halten und zu verbinden;
**dadurch gekennzeichnet, dass** der Einsatz (20) aus Kunststoff hergestellt wird und weiters einen Verstärkungsaufbau (22) bildet, der von einem radial innen liegenden Bereich des scheibenförmigen Teils (21) axial vorspringt und an der Ölschutzlippe (15) befestigt ist, um sicher zu stellen, dass diese Lippe einen geregelten radialen Berührungsdruck auf den Schaft (S) ausübt.

2. Abdichtungsvorrichtung gemäß Anspruch 1, **dadurch gekennzeichnet, dass** der Verstärkungsaufbau (22) von einer Seite des scheibenförmigen Teils (21) verläuft und eine im Wesentlichen axiale oder etwas kegelstumpfförmige, im Allgemeinen rohrförmige Form besitzt, die sich vom scheibenförmigen Teil (21) weg verjüngt.

3. Abdichtungsvorrichtung gemäß Anspruch 2, **dadurch gekennzeichnet, dass** der Verstärkungsaufbau (22) einen im Wesentlichen axialen oder etwas kegelstumpfförmigen, rohrförmigen Ansatz enthält, der sich vom scheibenförmigen Teil (21) weg verjüngt.

4. Abdichtungsvorrichtung gemäß Anspruch 1, **dadurch gekennzeichnet, dass** der Verstärkungsaufbau (22) vom scheibenförmigen Teil (21) unter einem stumpfen Winkel verläuft.

5. Abdichtungsvorrichtung gemäß Anspruch 1, **dadurch gekennzeichnet, dass** der Verstärkungsaufbau (22) mit dem scheibenförmigen Teil (21) über einen gekrümmten Anschlussteil verbunden ist.

6. Abdichtungsvorrichtung gemäß Anspruch 1, **dadurch gekennzeichnet, dass** der Körper (10) über den Kunststoffeinsatz (20) gegossen oder vulkanisiert wird, und dass der Einsatz (20) Ausnehmungen (23) und/oder erhabene Teile (24) besitzt, auf denen oder in denen durch ein Überformen komplementäre Gummiausformungen ausgebildet werden, die mit den erhabenen Teilen und/oder Ausnehmungen zusammenwirken, um die Verankerung zwischen dem Körper (10) und dem Verstärkungseinsatz (20) zu verbessern.

7. Abdichtungsvorrichtung gemäß Anspruch 6, **dadurch gekennzeichnet, dass** die Ausnehmungen (23) axiale Öffnungen oder Kerben (23) enthalten, die im scheibenförmigen Teil (21) ausgebildet sind.

8. Abdichtungsvorrichtung gemäß Anspruch 1, **dadurch gekennzeichnet, dass** der Einsatz (20) aus Polyamid hergestellt wird.

9. Abdichtungsvorrichtung gemäß Anspruch 1, **dadurch gekennzeichnet, dass** der Körper (10) weiters zumindest eine vierte Dichtungslippe (14) bildet.

## Revendications

1. Dispositif d'étanchéité pour amortisseurs, du type comprenant un corps globalement annulaire (10) en matériau de type caoutchouc ou élastomère associé à un insert de renforcement annulaire (20),
dans lequel le corps (10) forme, en une position radialement interne ou en position centrale, une lèvre hermétique à l'huile (15) et une lèvre protectrice contre la poussière (12) qui font saillie axialement sur des côtés opposés pour être en contact glissant avec une tige (S) d'un amortisseur, et, en une position radialement externe ou en position périphérique, une lèvre d'étanchéité statique (13),
et dans lequel l'insert (20) comprend une partie discoïde substantiellement annulaire (21) pour supporter et relier les lèvres (12, 13, 15) ;
**caractérisé en ce que** l'insert (20) est en matière plastique et forme aussi une structure de renforcement (22) qui fait saillie axialement depuis une région radialement interne de la partie discoïde (21) et qui est fixée à la lèvre hermétique à l'huile (15) pour assurer que cette lèvre exerce une pression de contact radial contrôlée contre la tige (S).

2. Dispositif d'étanchéité selon la revendication 1, **caractérisé en ce que** la structure de renforcement (22) s'étend depuis un côté de la partie discoïde (21), et a une forme globalement tubulaire, substantiellement axiale ou légèrement tronconique, qui se rétrécit en s'éloignant de la partie discoïde (21).

3. Dispositif d'étanchéité selon la revendication 2, **caractérisé en ce que** la structure de renforcement (22) comprend un appendice tubulaire, substantiellement axial ou légèrement tronconique, qui se rétrécit en s'éloignant de la partie discoïde (21).

4. Dispositif d'étanchéité selon la revendication 1, **caractérisé en ce que** la structure de renforcement (22) s'étend selon un angle obtus depuis la partie discoïde (21).

5. Dispositif d'étanchéité selon la revendication 1, **caractérisé en ce que** la structure de renforcement (22) est reliée à la partie discoïde (21) au moyen d'une partie de liaison courbée.

6. Dispositif d'étanchéité selon la revendication 1, **caractérisé en ce que** le corps (10) est surmoulé ou vulcanisé sur l'insert en plastique (20), et **en ce que** l'insert (20) comporte des évidements (23) et/ou des parties surélevées (24) sur ou dans lesquel(le)s sont produites, par surmoulage, des formations en caoutchouc complémentaires qui coopèrent avec les parties surélevées et/ou évidements afin d'améliorer l'ancrage entre le corps (10) et l'insert de renforcement (20).

7. Dispositif d'étanchéité selon la revendication 6, **caractérisé en ce que** les évidements (23) comprennent des ouvertures ou encoches axiales (23) formées dans la partie discoïde (21).

8. Dispositif d'étanchéité selon la revendication 1, **caractérisé en ce que** l'insert (20) est en polyamide.

9. Dispositif d'étanchéité selon la revendication 1, **caractérisé en ce que** le corps (10) forme aussi au moins une quatrième lèvre d'étanchéité (14).
